# EUROPEAN PATENT SPECIFICATION

(11) **EP 2 830 827 B1**
(45) Date of publication and mention of the grant of the patent: **09.03.2016**
(21) Application number: 12824719.4
(22) Date of filing: 21.12.2012
(51) Int. Cl.: B23Q 11/08

(54) **TELESCOPIC PROTECTIVE COVER**
TELESKOPISCHE SCHUTZABDECKUNG
COUVERCLE DE PROTECTION TÉLESCOPIQUE

(30) Priority: 30.03.2012 IT BO20120175
(43) Date of publication of application: 04.02.2015
(73) Proprietor: P.E.I. Protezioni Elaborazioni Industriali S.r.l., 40012 Calderara di Reno (Bologna) (IT)
(72) Inventor: MARDEGAN, Vittorio, I-26037 San Giovanni In Croce (IT); BISSOLO, Fulvio, I-39055 Laives (IT)
(74) Representative: Milli, Simone
(86) International application number: PCT/IB2012/057610
(87) International publication number: WO 2013/144688

(56) References cited:
- EP-A1- 1 410 876
- US-A1- 2011 017 410

## Description

### Technical field

This invention relates to a telescopic protective cover, comprising a plurality of box-shaped members which are slidable inside one another in a substantially sealed manner.

### Background art

Covers of this kind are used, in industrial contexts, both for accident prevention and as protection against dirt, swarf, dust, coolants or lubricants for the slideways of movable working parts of machine tools, automatic machines or robotized equipment systems.

More specifically, the box-shaped member at one end of the telescopic cover is mounted at a fixed position, whereas the box-shaped member at the opposite end is solidly connected to the movable working part of the machine or equipment system whose slideways must be protected. Generally speaking, telescopic covers are provided in pairs associated with each of the two sides of the feed stroke of the working part so that when the latter moves back and forth along the slideways, the extension of one telescopic cover corresponds to a complementary withdrawing of the other telescopic cover, and vice versa.

According to a first prior art technique, movement of the working part along the slideways causes the box-shaped members to abut each other in cascade, extending or withdrawing each telescopic cover according to the direction in which adjacent box-shaped members are driven in abutment.

Telescopic covers of this kind are usually provided with damping elements, interposed between contiguous box-shaped members, because the movement of the box-shaped members into abutment against each other causes a sequence of impacts of considerable intensity.

Although they reduce acceleration and deceleration of the box-shaped members, however, the damping elements are not able to provide them with the smooth and gradual movement that is, instead, desirable.

To solve this problem, according to solutions which are part of a different prior art technique, pantograph-type or articulated connection actuators have been produced, able to move all of the box-shaped members simultaneously, that is to say in a substantially synchronised fashion. According to this technique, all of the box-shaped members are connected to a pantograph whose two opposite ends are connected to the respective opposite ends of the telescopic cover.

That way, extension and withdrawing of the telescopic cover are controlled by the accordion-like movement of the pantograph which guarantees the uninterrupted, smooth movement of all of the box-shaped members.

An example of a pantograph able to simultaneously move all of the box-shaped members of a telescopic cover is provided in patent GB 757555.

The pantograph described in patent GB 757555 has a plurality of central pins, each fixed to a respective wall of a box-shaped member of the telescopic cover. Hinged to each central pin there are two rods, whose longitudinal ends are hinged to the longitudinal ends of the adjacent rods by means of peripheral pins.

In that configuration, all of the pins are subject to high levels of wear, as well as being greatly stressed. In addition to that, the peripheral pins are suspended, that is to say, they are not supported by the telescopic cover, and that, following wear on the pins and the play deriving from it, over time causes incorrect positioning of the pantograph which may result in it jamming or breaking.

This latter disadvantage is partly overcome in the pantograph described in patent DE 957710.

The pantograph described in patent DE 957710 has a plurality of central pins, each suspended between two adjacent box-shaped members of the telescopic cover. Hinged to each central pin there are two rods, whose longitudinal ends are hinged to the longitudinal ends of the adjacent rods by means of peripheral pins.

For each pair of peripheral pins aligned in the direction transversal to the direction of movement of the telescopic cover, one of the two pins is fixed to a respective wall of a box-shaped member, whilst the other is slidably coupled to a track mounted along the same wall of the box-shaped member.

Compared with the pantograph described in patent GB 757555, that described in patent DE 957710 is more stable because it has a larger number of pins supported by the telescopic cover and also the larger number of thrust/pulling pins (in this case the peripheral pins) allows, on one hand, improved balancing of actions on the box-shaped members, and on the other hand, reduction of the stresses on the pins.

However, even in the pantograph described in patent DE 957710, the rods are subjected to a considerable angular movement between the maximum extension and maximum withdrawal positions of the telescopic cover, and that still causes a high level of wear on the pins, as well as high stresses on them, in particular when the telescopic cover is in the maximum extension position.

Other examples of pantographs able to simultaneously move all of the box-shaped members of a telescopic cover are supplied in patent applications EP 963809 A2, EP 1232833 A1, EP 1262277 A1, US 2006/0102296. However, in these pantographs too the considerable angular movement of the rods between the maximum extension and maximum withdrawal positions of the telescopic cover causes high levels of wear and high stresses on the pins.

It is known from document EP 1410876, forming the base of the preamble of claim 1, to provide a telescopic cover with a plurality of dampers, designed as hinged links connected to adjacent box members.

### Disclosure of the invention

This invention has for an aim to provide a telescopic protective cover which is free of the above mentioned drawbacks.

The invention accordingly provides a telescopic protective cover as described in the appended claims.

### Brief description of the drawings

The advantages of the invention are more apparent from the detailed description which follows, with reference to the accompanying drawings which illustrate preferred non-limiting example embodiments of the invention. In these drawings:
Figure 1 is a schematic perspective view of a telescopic protective cover made according to the invention and in a maximum extension position;
Figure 2 is a perspective view of the cover of Figure 1, turned over and in its maximum extension position;
Figure 3 is a perspective view of the cover of Figure 1, turned over and in its maximum withdrawal position;
Figure 4 is a plan view of an alternative embodiment of the cover of Figure 1, turned over and in its maximum extension position; and
Figures 5 and 6 are two plan views of two further respective alternative embodiments of the cover of Figure 1, turned over in their maximum extension positions;
Figure 7 shows a scaled-up detail of the cover of Figure 1.

### Detailed description of the preferred embodiments of the invention

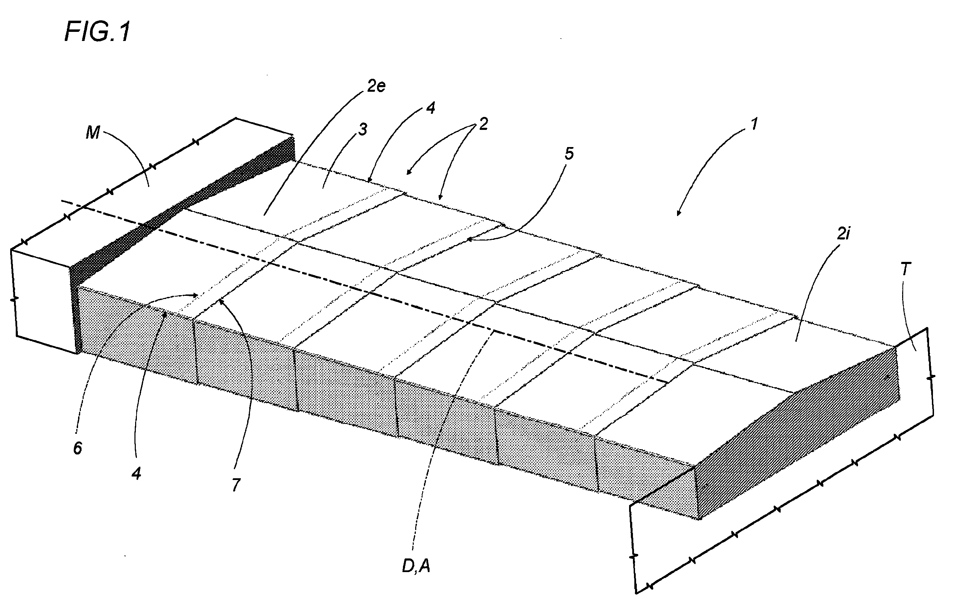

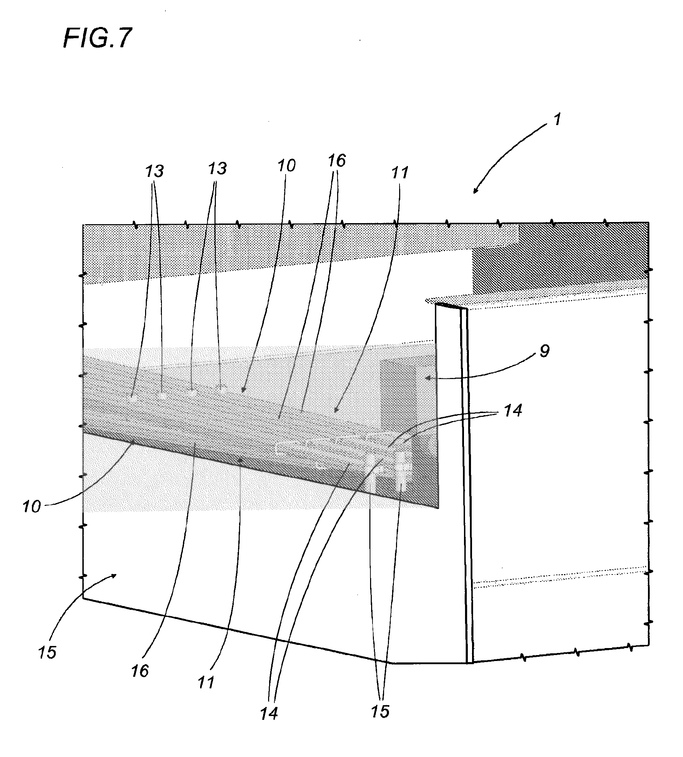

In Figures 1 to 3 and in Figure 7, the numeral 1 denotes in its entirety a telescopic protective cover designed to protect the slideways for movable working parts of machine tools, automatic machines or robotized equipment systems against dirt, swarf, dust, coolants or lubricants.

The cover 1 extends longitudinally along its own central axis A and comprises a plurality of box-shaped members 2, or boxes, made of sheet steel, which are slidable inside one another in a substantially sealed manner.

The innermost box-shaped member 2i is fixed to the frame T or to a stationary portion of the machine or the equipment system whose slideways 9 must be protected, whereas the outermost box-shaped member 2e is fixed to a respective end M of a working part with which the cover 1 is associated.

Therefore, all of the box-shaped members 2 are mobile, except the innermost box-shaped member 2i.

The telescopic cover 1 may be single or may be part of a pair of telescopic covers 1, structurally identical and opposite one another, each being associated with one of the two opposite ends M of the working part. In that way, when the working part moves back and forth along the slideways 9, the extension of one telescopic cover 1 corresponds to a complementary withdrawing of the other telescopic cover 1, and vice versa.

In each telescopic cover 1, the box-shaped members 2 comprise a larger protective wall 3 from which two side walls 4, or sides, extend at right angles.

In addition to the sides 4, the wall 3 is delimited by a front edge 5 and a rear edge 6 which both extend transversely to the direction D of movement and mutual sliding of the box-shaped members 2.

The direction D is parallel with the above-mentioned slideways 9 and with the above-mentioned axis A.

At the front edge 5 of each box-shaped member 2 there is a scraper 7 of known type.

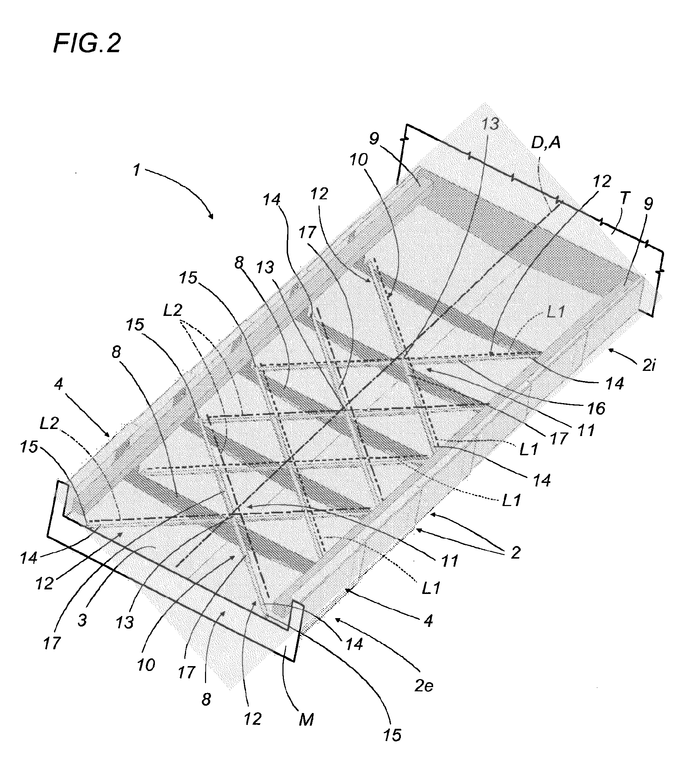

As shown in Figure 2, on the opposite side of the wall 3, the sides 4 are bent in the shape of an L in such a way that the box-shaped members 2 are transversely and telescopically contained inside each other, from the innermost one to the outermost one.

At the rear edge 6, each box-shaped member 2 also has a rear wall 8 extending at a right angle between the sides 4.

In known ways, not illustrated herein, the box-shaped members 2 are equipped with running systems such as, for example, rotary bearings, wheels, shoes and the like, mounted on the walls 8 and with further running systems such as, for example, rotary bearings, wheels, shoes and the like, mounted on the sides 4 to guarantee supporting and free running of the box-shaped members 2 relative to each other and of the telescopic cover 1 on the above mentioned slideways 9.

Each box-shaped member 2 is connected to each box-shaped member 2 adjacent to it by at least one pantograph 10 of a pair of pantographs 10 which are part of the cover 1.

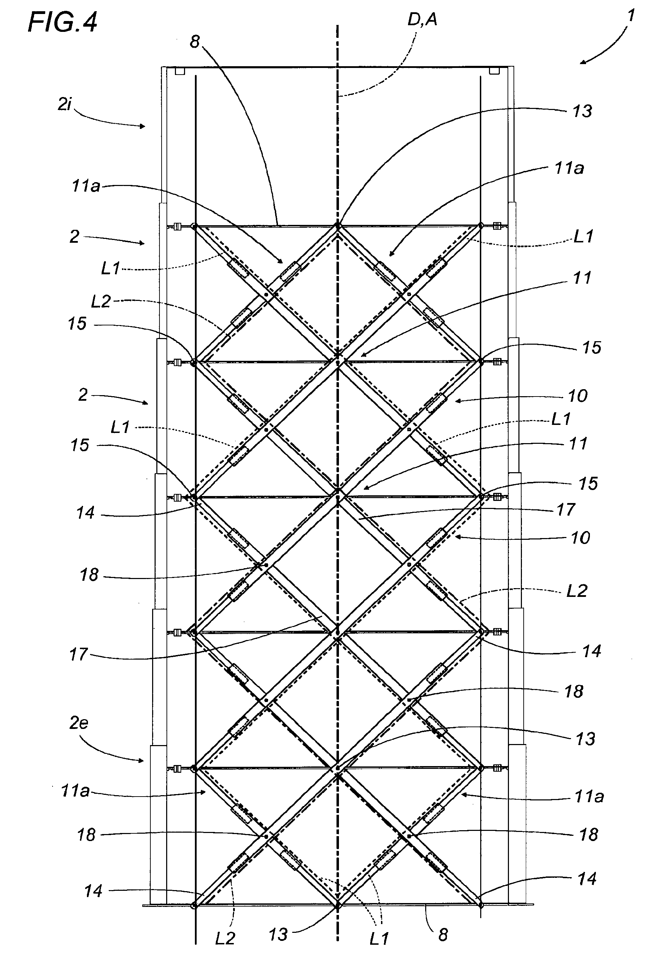

It should be noticed that, as shown in Figures 2 and 4 in particular, in reality there are two pantographs and each of them is an articulated connection. A first pantograph or articulated connection is illustrated with a dashed line L1 (drawn purely for the purpose of clarity), running parallel with the respective rods 17, whilst the second pantograph is illustrated with a dot - dashed line L2 (also drawn purely for clarity), running parallel with the respective rods 17 of the second pantograph.

Each pantograph 10, or articulated connection, comprises a plurality of basic cross joints 11, or basic crosses 11, which are adjacent to each other and interconnected one after another in the direction D of movement of the cover 1.

Each cross joint 11 comprises two telescopic arms 12 hinged centrally to one another by means of a central pin 13.

Each arm 12 comprises a tubular element 16 inside which two rods 17 which telescopically protrude from the two longitudinal ends of the selfsame tubular element 16 are slidably coupled.

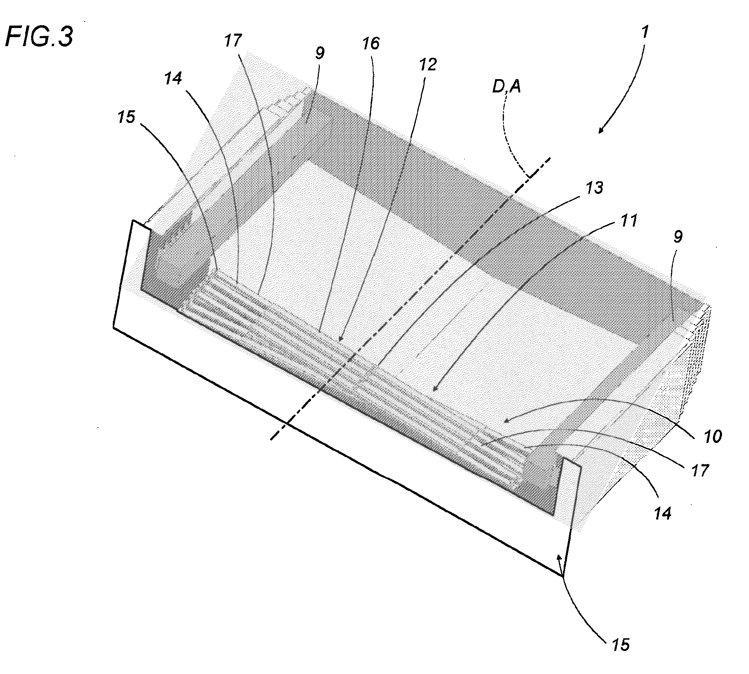

As shown in Figures 3 and 7, the tubular element 16 and the rods 17 have a flattened shape.

It is obvious that the rods 17 may have, for example, a hexagonal or elliptical shape, since such shapes are equivalent and similar to a flat shape.

At the centre of the tubular element 16, between the rods 17, there is a housing for accommodating the respective central pin 13.

Each telescopic arm 12 of the cross joint 11 comprises, on opposite sides of the central pin 13, two longitudinal ends 14 which are hinged to respective peripheral pins 15. Precisely, each of the rods 17 has, at its end 14 outside the tubular element 16, a housing for accommodating the respective peripheral pin 15.

The peripheral pins 15 are aligned, in pairs, in the direction transversal to the direction D of movement of the telescopic cover 1, and for each pair of peripheral pins 15 which are aligned with each other, both of the peripheral pins 15 are fixed to a single box-shaped member 2. In particular, both peripheral pins 15 are fixed to the same wall 8 of a box-shaped member 2 close to the respective sides 4.

The cross joints 11 are interconnected in pairs at a respective wall 8 by means of a shared pair of peripheral pins 15 which are aligned with each other.

The central pin 13 of each cross joint 11 is fixed to a box-shaped member 2 which is interposed between the adjacent box-shaped members 2 which the respective longitudinal ends 14 of the same cross joint 11 are hinged to in pairs.

In particular, the central pin 13 of each cross joint 11 is fixed to a movement wall 8 of a box-shaped member 2 which is interposed between the adjacent box-shaped members which the respective longitudinal ends 14 of the same cross joint 11 are hinged to in pairs.

The central pins 13 are aligned in a row extending parallel with the direction D of movement of the cover 1. In particular, each central pin 13 is centrally fixed to the respective wall 8. In more detail, observing Figure 2, the central pins 13 are present in all of the intermediate box-shaped members 2.

The peripheral pins 15 are arranged in two rows extending parallel with the direction D of movement of the cover 1 and at an equal distance from the row of central pins 13. In more detail, observing Figure 2, the peripheral pins 15 are present in all of the box-shaped members 2.

Each of the two pantographs 10 is constrained to a group of box-shaped members 2 which are arranged one after another. Precisely, one of the two pantographs 10 is constrained to the outermost box-shaped member 2θ and to all of the intermediate box-shaped members 2, whilst the other of the two pantographs 10 is constrained to the innermost box-shaped member 2i and to all of the intermediate box-shaped members 2. Therefore, each of the intermediate box-shaped members 2 is connected to both pantographs 10, and the latter are synchronised with one another in their extension and withdrawal movement.

In other words, the two pantographs 10 are superposed one on top of the other and offset from one another in the direction D of movement of the telescopic cover 1, that is to say, along the above-mentioned axis A. Along the direction D, that is to say, along the axis A, the peripheral pins 15 of one pantograph 10 alternate, one after another, with the peripheral pins 15 of the other pantograph 10.

According to the alternative embodiment in Figure 4, the two pantographs 10 of the pair of pantographs 10 are interconnected by means of a plurality of suspended pins 18, which are inserted in respective housings in the tubular elements 16.

In particular, each cross joint 11 of one pantograph 10 is hinged to the other pantograph 10 by means of four suspended pins 18, each of which is located at an intermediate position between the central pin 13 of the cross joint 11 and a respective longitudinal end 14 of the same cross joint 11. More precisely, the suspended pins 18 are arranged in two rows extending parallel with the direction D of movement of the cover 1 and at an equal distance from the row of central pins 13.

In this case, preferably, each of the two pantographs 10 is constrained to all of the box-shaped members 2. For that purpose, the central pins 13, as well as being present in all of the intermediate box-shaped members 2 are also present in the innermost box-shaped member 2i and in the outermost box-shaped members 2e. Therefore, each of the two pantographs 10 comprises two additional half-cross joints 11 a, which are hinged to the respective additional central pins 13, that is to say, to the central pin 13 of the wall 8 of the innermost box-shaped member 2i and, respectively, to the central pin 13 of the wall 8 of the outermost box-shaped member 2e.

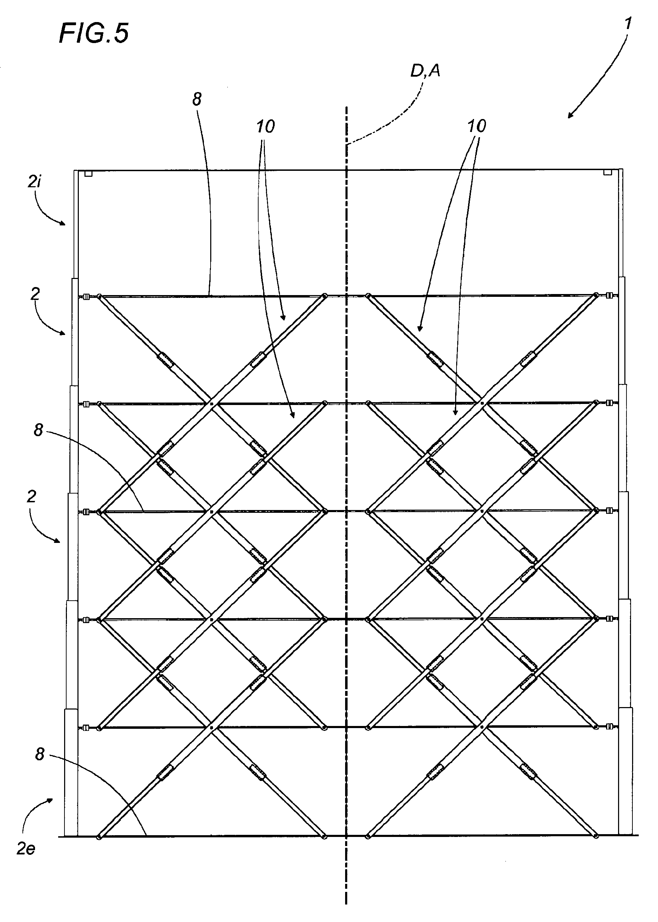

According to an alternative embodiment (not illustrated) of what is described with reference to Figures 1 to 3, one of the two pantographs 10 is absent and the cover 1 comprises a single pantograph 10 which connects all of the box-shaped members 2. In this case, preferably, each cross joint 11 is interposed between a respective pair of walls 8 which are facing each other, with the related pin 13 suspended between the walls 8. Figure 5 shows a further alternative embodiment of what is described with reference to Figures 1 to 3, in which there are two pairs of pantographs 10 which are arranged symmetrically side by side, that is to say, an equal distance from the longitudinal central axis A of the telescopic cover 1.

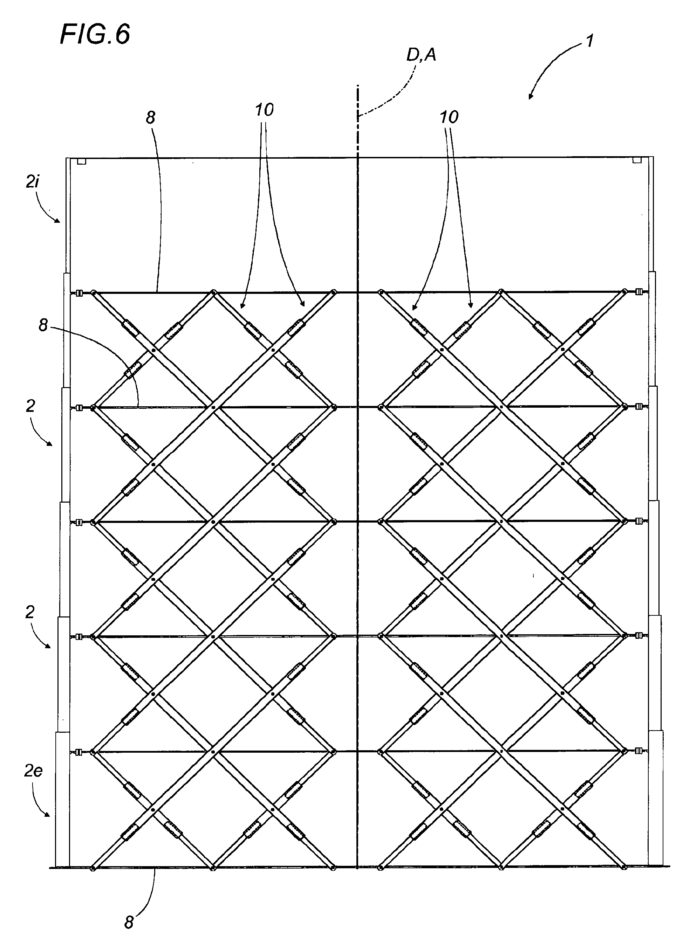

Figure 6 shows an alternative embodiment of what is described with reference to Figure 4, in which there are two pairs of pantographs 10 which are interconnected. Again in this case, the two pairs of pantographs are arranged symmetrically side by side, that is to say, an equal distance from the longitudinal central axis A of the telescopic cover 1.

The alternative embodiments in Figures 5 and 6 are particularly useful for wide telescopic covers and/or in those cases in which one wants to reduce stresses on the pins.

Finally, it should be noticed that although reference was made to two pairs of pantographs or articulated connections, obviously there could be more than two. Moreover, according to embodiments not illustrated, the above-mentioned articulated connections or pantographs could be mounted in different positions relative to the cover 1, for example parallel with the sides 4 and not necessarily arranged symmetrically.

In all of the alternative embodiments illustrated above, the maximum opening angle of the cross joints is kept less than the telescopic covers of the known type, the travel between the box-shaped members being the same. Moreover, the stationary position of the peripheral pins, guaranteeing a relatively large constant relative distance between the peripheral pins, allows balanced pulling without oscillations and/or bending of the box-shaped members. All of that advantageously guarantees, on one hand, a reduction in stresses on the pins, and, on the other hand, a reduction in wear on the pins and rods thanks to their reduced relative rotation.

Any distortions of the motion are automatically compensated for by the variable length of the telescopic arms.

The invention described is susceptible of industrial application and may be modified and adapted in several ways without thereby departing from the scope of the inventive concept, as defined by the claims. Moreover, all the details of the invention may be substituted with technically equivalent elements.

## Claims

1. A telescopic protective cover, comprising a plurality of box-shaped members (2) slidable inside one another and at least one pantograph (10) constrained to a group of box-shaped members (2) arranged in succession; the pantograph or articulated connection (10) comprises a plurality of basic cross joints (11) which are adjacent to each other and interconnected in succession in the direction (D) of movement of the telescopic cover (1); each cross joint (11) comprises two arms (12) hinged centrally to one another through the agency of a central pin (13); each arm (12) has, on opposite sides of the central pin (13), two longitudinal ends (14) which are hinged to respective peripheral pins (15); **wherein** the arms (12) of the cross joints of the pantograph (10) are telescopic and, for each pair of peripheral pins (15) of the pantograph (10) which are aligned in a direction transversal to the direction (D) of movement of the telescopic cover (1), both of the peripheral pins (15) are fixed to a single box-shaped member (2), **the telescopic cover (1) being characterized in that**
the central pin (13) of each cross joint (11) is fixed to a box-shaped member (2) which is interposed between the adjacent box-shaped members (2) which the respective longitudinal ends (14) of the same cross joint (11) are hinged to in pairs.

2. The telescopic protective cover according to claim **1**, **characterized in that** the central pins (13) are aligned in a row extending parallel to the direction (D) of movement of the telescopic cover (1).

3. The telescopic protective cover according to claim **2**, **characterized in that** the peripheral pins (15) are aligned in two rows extending parallel to the direction (D) of movement of the telescopic cover (1) and at an equal distance from the row of central pins (13).

4. The telescopic protective cover according to any of the claims from **1** to **3**, **characterized in that** it comprises at least one pair of pantographs or articulated connection (10), placed over each and mutually offset along the direction (D) of movement of the telescopic cover (1); the peripheral pins (15) of one pantograph (10) being alternated, along the direction (D), with the peripheral pins (15) of the other pantograph (10).

5. The telescopic protective cover according to claim **4**, **characterized in that** the two pantographs (10) of the pair of pantographs (10) are interconnected with one another through the agency of a plurality of suspended pins (18); each cross joint (11) of one pantograph (10) being hinged to the other pantograph (10) through the agency of four suspended pins (18), each of which is located at an intermediate position between the central pin (13) of the cross joint (11) and a respective longitudinal end (14) of the same cross joint (11).

6. The telescopic protective cover according to claims 3 and **5**, **characterized in that** the suspended pins (18) are aligned in two rows extending parallel to the direction (D) of movement of the cover (1) and at an equal distance from the row of central pins (13).

7. The telescopic protective cover according to any of the claims from **4** to **6**, **characterized in that** it comprises two pairs of pantographs (10), the two pantographs (10) of each pair being placed over each and mutually offset along the direction (D) of movement of the telescopic cover (1); the two pairs of pantographs (10) being placed side by side and being equidistant from the central longitudinal axis (A) of the telescopic cover (1).

8. The telescopic protective cover according to any of the claims from 1 to **7**, **characterized in that** each arm (12) comprises a tubular element (16) inside which two rods (17) which telescopically protrude from the two longitudinal ends of the selfsame tubular element (16) are slidably coupled; the tubular element (16) being provided centrally, between the rods, with a housing for accommodating the respective central pin (13); and each of the rods (17) being provided, at the end of it (14) outside the tubular element, with a housing for accommodating the respective peripheral pin (15).

9. The telescopic protective cover according to claim **8**, **characterized in that** the tubular element (16) and the rods (17) have a flattened shape.

## Patentansprüche

1. Teleskopische Schutzabdeckung, umfassend eine Vielzahl an kastenförmigen Elementen (2), die ineinander verschiebbar sind, und mindestens einen Pantografen (10), der mit einer Gruppe an kastenförmigen Elementen (2) verbunden ist, die nacheinander angeordnet sind. Der Pantograf oder die Gelenkverbindung (10) umfasst eine Vielzahl an Basiskreuzgelenken (11), die aneinander angrenzen und nacheinander in der Richtung (D) der Bewegung der teleskopischen Abdeckung (1) miteinander verbunden sind, wobei ein jedes Kreuzgelenk (11) zwei Arme (12) umfasst, die mittig mittels der Wirkung eines zentralen Stifts (13) gelenkig miteinander verbunden sind, wobei jeder Arm (12) an entgegengesetzten Seiten des zentralen Stifts (13) zwei Längsenden (14) aufweist, die gelenkig mit jeweiligen umfangsseitigen Stiften (15) verbunden sind, wobei die Arme (12) der Kreuzgelenke des Pantografen (10) teleskopisch sind und für jedes Paar umfangsseitiger Stifte (15) des Pantografen (10), die quer zur Richtung (D) der Bewegung der teleskopischen Abdeckung (1) ausgerichtet sind, beide umfangsseitigen Stifte (15) an einem einzelnen kastenförmigen Element (2) fixiert sind, wobei die teleskopische Abdeckung (1) **dadurch gekennzeichnet ist, dass** der zentrale Stift (13) eines jeden Kreuzgelenks (11) an einem kastenförmigen Element (2) fixiert ist, das zwischen den angrenzenden kastenförmigen Elementen (2) eingesetzt ist, an denen die jeweiligen Längsenden (14) desselben Kreuzgelenks (11) in Paaren gelenkig befestigt sind.

2. Teleskopische Schutzabdeckung nach Anspruch 1, **dadurch gekennzeichnet, dass** die zentralen Stifte (13) in einer Reihe ausgerichtet sind, die sich parallel zur Richtung (D) der Bewegung der teleskopischen Abdeckung (1) erstreckt.

3. Teleskopische Schutzabdeckung nach Anspruch 2, **dadurch gekennzeichnet, dass** die umfangsseitigen Stifte (15) in zwei Reihen ausgerichtet sind, die sich parallel zur Richtung (D) der Bewegung der teleskopischen Abdeckung (1) erstrecken und in einem gleichen Abstand von der Reihe der zentralen Stifte (13).

4. Teleskopische Schutzabdeckung nach einem der Ansprüche 1 bis 3, **dadurch gekennzeichnet, dass** sie mindestens ein Paar Pantografen oder eine Gelenkverbindung (10) umfasst, platziert übereinander und gegenseitig versetzt entlang der Richtung (D) der Bewegung der teleskopischen Abdeckung (1), wobei die umfangsseitigen Stifte (15) eines Pantografen (10) entlang der Richtung (D) mit den umfangsseitigen Stiften (15) des anderen Pantografen (10) abgewechselt sind.

5. Teleskopische Schutzabdeckung nach Anspruch 4, **dadurch gekennzeichnet, dass** die zwei Pantografen (10) des Paars der Pantografen (10) durch die Wirkung einer Vielzahl an aufgehängten Stiften (18) miteinander verbunden sind, wobei ein jedes Kreuzgelenk (10) gelenkig mit dem anderen Pantografen (10) durch die Wirkung von vier aufgehängten Stiften (18) verbunden ist, von denen ein jeder an einer Zwischenposition zwischen dem zentralen Stift (13) des Kreuzgelenks (11) und einem jeweiligen Längsende (14) desselben Kreuzgelenks (11) positioniert ist.

6. Teleskopische Schutzabdeckung nach Anspruch 3 und 5, **dadurch gekennzeichnet, dass** die aufgehängten Stifte (18) in zwei Reihen ausgerichtet sind, die sich parallel zur Richtung (D) der Bewegung der Abdeckung (1) erstrecken und in einem gleichen Abstand von der Reihe der zentralen Stifte (13).

7. Teleskopische Schutzabdeckung nach einem der Ansprüche 4 bis 6, **dadurch gekennzeichnet, dass** sie zwei Paar Pantografen (10) umfasst, wobei die zwei Pantografen (10) eines jeden Paars übereinander und gegenseitig versetzt entlang der Richtung (D) der Bewegung der teleskopischen Abdeckung (1) platziert sind, wobei die zwei Paare Pantografen (10) nebeneinander und im gleichen Abstand von der mittigen Längsachse (A) der teleskopischen Abdeckung (1) platziert sind.

8. Teleskopische Schutzabdeckung nach einem der Ansprüche 1 bis 7, **dadurch gekennzeichnet, dass** ein jeder Arm (12) ein Rohrelement (16) umfasst, in dem zwei Stangen (17), die teleskopisch aus den zwei Längsenden des Rohrelements (16) hervortreten, verschiebbar gekuppelt sind, wobei das Rohrelement (16) mittig zwischen den Stangen mit einem Gehäuse versehen ist, um den jeweiligen zentralen Stift (13) aufzunehmen, und eine jede der Stangen (17) an deren Ende (14) außerhalb des Rohrelements mit einem Gehäuse versehen ist, um den jeweiligen umfangsseitigen Stift (15) aufzunehmen.

9. Teleskopische Schutzabdeckung nach Anspruch 8, **dadurch gekennzeichnet, dass** das Rohrelement (16) und die Stangen (17) eine abgeflachte Form aufweisen.

## Revendications

1. Protecteur télescopique comprenant une pluralité d'organes en forme de boîte (2) pouvant coulisser les uns dans les autres et au moins un pantographe (10) solidaire d'un groupe d'organes en forme de boîte (2) disposés en succession ; le pantographe ou raccordement articulé (10) comprend une pluralité de joints verticaux de base (11) étant adjacents les uns par rapport aux autres et reliés en succession dans la direction (D) de mouvement du protecteur télescopique (1) ; chaque joint vertical (11) comprend deux bras (12) montés articulés centralement l'un par rapport à l'autre au moyen d'une goupille centrale (13) ; chaque bras (12) possède, sur des côtés opposés de la goupille centrale (13), deux extrémités longitudinales (14) qui sont montées articulées à des goupilles périphériques respectives (15) ; dans lequel les bras (12) des joints verticaux du pantographe (10) sont télescopiques et, pour chaque paire de goupilles périphériques (15) du pantographe (10) qui sont alignées dans une direction transversale à la direction (D) de mouvement du protecteur télescopique (1), les deux goupilles périphériques (15) sont fixées à un seul organe en forme de boîte (2), le protecteur télescopique (1) étant **caractérisé en ce que** la goupille centrale (13) de chaque joint vertical (11) est fixée à un organe en forme de boîte (2) qui est interposé entre les organes adjacents en forme de boîte (2) dont les extrémités longitudinales respectives (14) du même joint vertical (11) sont montées articulées par paires.

2. Protecteur télescopique selon la revendication 1, **caractérisé en ce que** les goupilles centrales (13) sont alignées dans une rangée se développant parallèlement à la direction (D) de mouvement du protecteur télescopique (1).

3. Protecteur télescopique selon la revendication 2, **caractérisé en ce que** les goupilles périphériques (15) sont alignées dans deux rangées se développant parallèlement à la direction (D) de mouvement du protecteur télescopique (1) et à égale distance de la rangée de goupilles centrales (13).

4. Protecteur télescopique selon l'une quelconque des revendications de 1 à 3, **caractérisé en ce qu'**il comprend au moins une paire de pantographes ou de raccordements articulés (10), placés l'un sur l'autre et mutuellement décalés le long de la direction (D) de mouvement du protecteur télescopique (1) ; les goupilles périphériques (15) d'un pantographe (10) étant alternées, le long de la direction (D), avec les goupilles périphériques (15) de l'autre pantographe (10).

5. Protecteur télescopique selon la revendication 4, **caractérisé en ce que** les deux pantographes (10) de la paire de pantographes (10) sont reliés l'un à l'autre au moyen d'une pluralité de tiges suspendues (18) ; chaque joint vertical (11) d'un pantographe (10) étant monté articulé à l'autre pantographe (10) au moyen de quatre tiges suspendues (18), chacune d'elle est située au niveau d'une position intermédiaire entre la goupille centrale (13) du joint vertical (11) et une extrémité longitudinale respective (14) du même joint vertical (11).

6. Protecteur télescopique selon les revendications 3 et 5, **caractérisé en ce que** les tiges suspendues (18) sont alignées dans deux rangées se développant parallèlement à la direction (D) de mouvement du protecteur (1) et à égale distance de la rangée de goupilles centrales (13).

7. Protecteur télescopique selon l'une quelconque des revendications de 4 à 6, **caractérisé en ce qu'**il comprend deux paires de pantographes (10), les deux pantographes (10) de chaque paire étant placés l'un au-dessus de l'autre et mutuellement décalés le long de la direction (D) de mouvement du protecteur télescopique (1) ; les deux paires de pantographes (10) étant placées côte à côte et étant équidistantes de l'axe longitudinal central (A) du protecteur télescopique (1).

8. Protecteur télescopique selon l'une quelconque des revendications de 1 à 7, **caractérisé en ce que** chaque bras (12) comprend un élément tubulaire (16) à l'intérieur duquel deux tiges (17), qui dépassent de façon télescopique des deux extrémités longitudinales du même élément tubulaire (16), sont accouplées de façon coulissante ; l'élément tubulaire (16) étant pourvu au centre, entre les tiges, d'un logement pour loger la goupille centrale respective (13) ; et chacune des tiges (17) étant pourvue, à sa propre extrémité (14), externe à l'élément tubulaire, d'un logement destiné à loger la goupille périphérique respective (15).

9. Protecteur télescopique selon la revendication 8, **caractérisé en ce que** l'élément tubulaire (16) et les tiges (17) possèdent une forme plate.
